# EUROPÄISCHE PATENTSCHRIFT

(11) **EP 2 540 596 B1**
(45) Veröffentlichungstag und Bekanntmachung des Hinweises auf die Patenterteilung: **31.12.2014**
(21) Anmeldenummer: 12004584.4
(22) Anmeldetag: 19.06.2012
(51) Int. Cl.: B62D 15/02, B60T 8/1755, G08G 1/16, B60W 50/14

(54) **Verfahren und Vorrichtung zum teilautomatischen Fahren eines Kraftfahrzeugs**
Method and device for driving a motor vehicle partially automatically
Procédé et dispositif de conduite semi-automatique d'un véhicule automobile

(30) Priorität: 29.06.2011 DE 102011107369; 07.01.2012 DE 102012000724
(43) Veröffentlichungstag der Anmeldung: 02.01.2013
(73) Patentinhaber: Volkswagen Aktiengesellschaft, 38440 Wolfsburg (DE)
(72) Erfinder: Bartels, Anrme, Dr., 38448 Wolfsburg (DE); Karrenberg, Simon, Dr., 38106 Braunschweig (DE)

(56) Entgegenhaltungen:
- WO-A1-2009/141092
- DE-A1-102004 062 504
- DE-A1-102006 057 842
- JP-A- 2008 097 501
- US-A1- 2010 324 797

## Beschreibung

Die Erfindung betrifft ein Verfahren zum teilautomatischen Fahren eines Kraftfahrzeugs gemäß dem Oberbegriff des Anspruchs 1 sowie ein entsprechendes Fahrerassistenzsystem mit einer teilautomatischen Fahrfunktion gemäß dem Oberbegriff des Anspruchs 8.

Untersuchungen der Unfallforschung haben ergeben, dass ca. 95% der Unfälle mit tödlichem Ausgang auf menschliches Fehlverhalten des Fahrers zurückzuführen sind. Ferner ergab eine Studie in den USA, dass ca. 80% aller Unfälle und ca. 65% aller Beinahe-Unfälle durch einen unaufmerksamen oder abgelenkten Fahrer verursacht wurden. Eine Ursache für den unaufmerksamen oder abgelenkten Fahrer ist beispielsweise eine Überforderung mit komplexen Fahrsituationen, wie das Einfädeln auf die Autobahn oder das Abbiegen an belebten Kreuzungen. Andererseits werden Fahrer durch monotone oder langweilige Fahraufgaben unterfordert und lassen sich in diesem Fall leicht ablenken oder werden unaufmerksam. Beispiele für diese Situation sind das Fahren in einem Stau oder Langstreckenfahrten.

Für monotone Fahrsituationen, die leicht eine Unterforderung des Fahrers bewirken können, sind eine Reihe von Fahrerassistenzsystemen entwickelt worden und befinden sich in Gebrauch, die den Fahrer bei Routinefahrtätigkeiten, wie "sicheren Abstand zum vorausfahrenden Fahrzeug halten", "Geschwindigkeit anpassen und halten" oder "Fahrzeug in der Fahrspur halten", unterstützen und entlasten. Mit derartigen Assistenzsystemen wird der Fahrer dabei unterstützt, monotone Fahraufgaben fehlerfrei zu absolvieren.

Fahrerassistenzsysteme, die zur Bewältigung der oben genannten Routinetätigkeiten beitragen, sind die adaptive Geschwindigkeits- und Abstandsregelung, auch als ACC-System oder automatische Distanzregelung bezeichnet, oder der Spurhalteassistent, auch als Lane-Assist bezeichnet. Beide Assistenzsysteme sind derzeit allein oder in Kombination als Sonderausstattungen bereits im Einsatz.

Ebenso sollen automatische Fahrfunktionen den Fahrer bei monotonen und langweiligen Fahraufgaben wie die genannten Staufolgefahrten oder Langstreckenfahrten unterstützen und Unfälle verhindern.

Der Autobahnassistent, der beispielsweise aus der DE 10 2005 050 662 A1 bekannt ist, ist ein den Fahrer unterstützendes Fahrerassistenzsystem mit der Intention des teilautomatischen Fahrens, der einen Spurwechselassistenten, eine Vorrichtung zu Erkennung der Fahrspur, eine Navigationseinrichtung und eine automatische Distanzregelung umfasst. Dabei bringt der Autobahnassistent ein zusätzliches Lenkmoment auf die Lenkung auf, wenn er erkennt, dass die Wunschgeschwindigkeit des Fahrzeugs aufgrund eines vorausfahrenden Fahrzeugs herabgesetzt werden müsste und eine Lücke zum Fahrbahnwechsel auf der Überholspur vorhanden ist. Mit anderen Worten, der Autobahnassistent überholt bei einer entsprechenden Verkehrssituation auf der Autobahn selbstständig, so dass die Bezeichnung teilautomatisches Fahren gerechtfertigt ist.

Das EU-Forschungsprojekt "HAVEit" (Highly Automated Vehicles for Intelligent Transport) betrifft die Entwicklung von Fahrerassistenzsystemen zum selektiven automatischen Fahren. Die Intention dieses EU-Projekts kann beispielsweise dem Artikel von R. Hoeger et.al.: "Selective Automated Driving as a Pivotal Element to Solve Safety and Environmental Issues in Personal Mobility", Proceedings of the 16th World Congress on ITS, Stockholm, September 2009, entnommen werden.

Im Rahmen dieses EU-Projekts wurde der Temporäre Auto Pilot oder "Temporary Auto Pilot", kurz TAP, von der Volkswagen AG entwickelt, der eine teilautomatische Fahrfunktion durch die Bündelung der Funktionen mehrerer Fahrerassistenzsysteme bereitstellt, wobei der "Temporary Auto Pilot" TAP dem Fahrer in Abhängigkeit von Fahrsituation, Umgebungserfassung, Fahrer- und Systemzustand den jeweils optimalen Automatisierungsgrad anbietet. Hierdurch sollen Unfälle durch Fahrfehler eines unaufmerksamen, abgelenkten Fahrers verhindert werden. Im teilautomatischen Fahrmodus - kurz Pilot-Modus genannt - hält der TAP einen sicheren Abstand zum Vordermann, stellt die vom Fahrer ausgewählte Wunschgeschwindigkeit ein, reduziert diese gegebenenfalls vor einer Kurve und hält das Fahrzeug in der Fahrstreifenmitte. Ebenso werden das Rechtsüberholverbot und Geschwindigkeitsbegrenzungen beachtet. Auch das Anhalten und Wiederanfahren im Stau erfolgt automatisch. Mit dem TAP ist eine Geschwindigkeit auf Autobahnen oder autobahnähnlichen Straßen bis zu 130 Stundenkilometern möglich. Der Fahrer muss dabei aber seine Aufmerksamkeit weiter dauerhaft auf die Straße richten, um in sicherheitsrelevanten Situationen jederzeit eingreifen zu können. Der TAP basiert auf einer vergleichsweise seriennahen Sensorplattform, bestehend aus seriengefertigten Radar-, Kamera-, und Ultraschallsensoren ergänzt durch einen Laserscanner und einen elektronischen Horizont zur Detektion des Umfeldes des Fahrzeugs. Allerdings kann die teilautomatische Fahrfunktion bei niedrigen Geschwindigkeiten insbesondere im Stau oder bei Fahrten in der Stadt noch optimiert werden.

Ferner werden der Vollständigkeit halber noch vollautomatisch fahrende, fahrerlose Fahrzeuge, wie beispielsweise "Junior" aus der "Darpa Urban Challenge" benannt, die auf einem abgesperrten Prüfgelände eine urbane Teststrecke inklusive Fahrstreifenwechsel eigenständig und fahrerlos bewältigen.

Die Druckschrift US 2010/0324797 A1 ist als nächstliegender Stand der Technik zu sehen und betrifft ein Verfahren zur Längs- und Querführungsunterstützung des Fahrers eines Fahrzeugs, bei dem die Längsführungsunterstützung als Abstandsregelung zur Regelung des Abstands zwischen dem Fahrzeug und einem diesem vorausfahrenden Führungsfahrzeug durchgeführt wird und bei dem die Querführungsunterstützung wahlweise als eine Objektfolgeregelung zur Führung des Fahrzeugs nach einer Bewegungsspur des vorausfahrenden Führungsfahrzeugs oder als eine Spurfolgeregelung zur Führung des Fahrzeugs längs einer markierten Fahrspur bzw. als eine kombinierte Spur-Objektfolgeregelung durchgeführt wird. Die Querführungsunterstützung ist dabei nur dann verfügbar, wenn die Abstandsregelung aktiv ist und wenn weiterhin der Abstand zwischen dem Fahrzeug und dem Führungsfahrzeug geringer ist als eine vorbestimmte Abstandsgrenze und/oder dass ein Deichselwinkel als Sichtwinkel vom Fahrzeug zum Führungsfahrzeug geringer ist als eine vorbestimmte Winkelgrenze.

Die Druckschrift WO 2009/141092 A1 betrifft ein Fahrerassistenzsystem zur Vermeidung von Kollisionen eines Fahrzeugs mit Fußgängern umfassend einen Kamera- und/oder Strahlsensor. Wird einerseits ein Fußgängerüberweg detektiert und wird andererseits ein Objekt detektiert, das sich mit einer bestimmten Geschwindigkeit auf dem Fußgängerüberweg bewegt, so wird Objekt mit hoher Wahrscheinlichkeit ein Fußgängersein und es wird eine Warnung an den Fahrer ausgegeben, um eine potenzielle Kollision des Fahrzeugs mit dem Fußgänger zu verhindern.

Der Erfindung liegt daher die Aufgabe zugrunde, die vom Fahrer überwachte teilautomatische Fahrfunktion eines Fahrerassistenzsystems, insbesondere für niedrige Geschwindigkeiten, im aktiven Zustand zu verbessern.

Diese Aufgabe wird durch ein Verfahren mit den Merkmalen des Anspruchs 1 sowie durch ein Fahrerassistenzsystem mit den Merkmalen des Anspruchs 8 gelöst. Bevorzugte Ausführungsformen der Erfindung sind Gegenstand der Unteransprüche.

Bei dem erfindungsgemäßen Verfahren zum Fahren eines Kraftfahrzeuges mit einer teilautomatischen Fahrfunktion zur Längs- und Querführung des Kraftfahrzeugs, wobei der Fahrer des Kraftfahrzeugs die teilautomatische Fahrfunktion dauerhaft überwacht, wird bei aktiver teilautomatischen Fahrfunktion eine Umfelderkennung des Kraftfahrzeugs durchgeführt, werden aus den Umfelddaten der Umfelderkennung fortlaufend Verkehrsteilnehmer im Umfeld einschließlich ihrer Bewegungstrajektorien bestimmt, und ergeht bei aktiver teilautomatischer Fahrfunktion eine Übernahmeaufforderung mit dem Ziel der Beendigung der teilautomatischen Fahrfunktion an den Fahrer, wenn ein sich neues bewegendes Objekts im Umfeld des Kraftfahrzeugs ermittelt wird, dessen Verhalten nicht mit dem üblicher Verkehrsteilnehmer übereinstimmt und welches nicht den von der Umfelderkennung bestimmten Verkehrsteilnehmern zugeordnet werden kann.

Mit anderen Worten, wenn die teilautomatische Fahrfunktion aktiv ist und die Quer- und Längsführung des Kraftfahrzeugs ausführt, wird der Fahrer zur Übernahme der Fahrzeugführung mit dem Ziel der Beendigung der teilautomatischen Fahrfunktion aufgefordert, wenn ein sich bewegendes Objekt im Umfeld, insbesondere im näheren Umfeld, des Kraftfahrzeugs detektiert wird, dessen Verhalten nicht mit dem eines üblichen Verkehrsteilnehmers übereinstimmt. Dieses "unübliche" Verhalten kann beispielsweise aus der Bewegungstrajektorie des sich bewegenden Objekts abgeleitet werden. Befindet sich das Fahrzeug mit aktiver teilautomatischer Fahrfunktion in einem Stau beispielsweise im Stillstand, so kennt die teilautomatische Fahrfunktion die Verkehrsteilnehmer im Umfeld und deren vergangene Bewegungstrajektorien sowie zukünftige Bewegungsprognosen. Wird nun ein neues, sich bewegendes Objekt im Umfeld erkannt, welches nicht den bekannten Verkehrsteilnehmern zugeordnet werden kann, so könnte es sich um einen Fußgänger im Staubereich handeln. Um eine Gefährdung auszuschließen, wird eine Übernahmeaufforderung an den Fahrer gerichtet. Ferner kann das automatische Wiederanfahren des Fahrzeugs im Stau durch die teilautomatische Fahrfunktion unterbunden werden.

Zur Berücksichtigung der sich bewegenden Objekte im Umfeld des Kraftfahrzeugs wird vorzugsweise die teilautomatische Fahrfunktion in einem niedrigen Geschwindigkeitsbereich, insbesondere in einem Bereich kleiner 60 km/h, des Kraftfahrzeugs betrieben. Zwar ist die teilautomatische Fahrfunktion üblicherweise für einen Geschwindigkeitsbereich von kleiner oder gleich 130 km/h ausgelegt, um monotone oder langweilige Fahraufgeben zu übernehmen, die Gefahr des Auftretens von Fußgängern oder Zweirädern ist üblicherweise während eines Staus oder im innerstädtischen Verkehr gegeben.

Vorzugsweise handelt es sich bei dem sich bewegenden Objekt um einen Fußgänger, einen Radfahrer oder ein sich regelwidrig verhaltendes Kraftrad. Fußgänger oder Krafträder als Beispiele sich bewegender Objekte können innerstädtisch und in einem Stau auf einer Autobahn oder Schnellstraße auftreten, während Radfahrer im innerstädtischen Bereich berücksichtigt werden müssen.

Weiter bevorzugt wird eine Analyse des sich bewegenden Objekts durchgeführt, wobei die Aufforderung zur Übernahme der Fahrfunktion an den Fahrer erfolgt, wenn die Analyse einen Fußgänger im Umfeld des Kraftfahrzeugs prognostiziert. So kann es sich bei dem sich bewegenden Objekt im Stau um eine Fahrzeugtür eines stehenden Fahrzeugs in unmittelbarer Nähe zu dem eigenen Fahrzeug handeln, die geöffnet wird. Daraus kann gefolgert werden, dass mit einem plötzlichen Auftauchen eines Fußgängers auf der Fahrbahn gerechnet werden muss. Die Analyse der Umfeldsituation prognostiziert daher das Auftauchen einen Fußgänger und es erfolgt eine Aufforderung zur Übernahme der Fahrzeugführung an den Fahrer.

Weiter bevorzugt wird bei einer Nichtbeachtung der Übernahmeaufforderung seitens des Fahrers nach einem vorgegebenen Zeitintervall das Fahrzeug situationsabhängig zum Stillstand gebracht. Mit dieser Maßnahme wird die Sicherheit der teilautomatischen Fahrfunktion erhöht. Situationsabhängig bedeutet, dass das Fahrzeug ohne Gefährdung des Verkehrs zum Stillstand gebracht wird. Beispielsweise wird daher das Fahrzeug bei einem Stillstand in einem Stau nicht wieder angefahren. Befindet sich das Fahrzeug in Fahrt, so wird es ohne Verwendung der Notbremsfunktion zum Stillstand gebracht, da damit nachfolgender Verkehr gefährdet wäre.

Vorzugsweise wird die Analyse des sich bewegenden Objekts innerhalb der Umfelderkennung des Kraftfahrzeugs durchgeführt und/oder aus Warnmeldungen eines zentralen Dienstes abgeleitet. Mit anderen Worten, innerhalb der Umfelderkennung erfolgt die Situationsanalyse, um die Prognose des sich bewegenden Objekts, insbesondere eines Fußgängers, zu erstellen. Ferner ist es auch möglich, aus Warnmeldungen eines zentralen Dienstes, wie beispielsweise funkbasierten Verkehrsinformationsdiensten, auf Fußgänger oder andere Gefahrenquellen im vorausliegenden Streckenabschnitt zu folgern.

Weiter bevorzugt wird aus von der Umfelderkennung erkannten Umfeldbedingungen und/oder durch von einer Navigationseinrichtung bestimmten Umfeldbedingungen auf eine erhöhte Auftretungsgefahr von sich bewegenden Objekten, insbesondere Fußgänger, geschlossen. Dies bedeutet, dass das plötzliche Auftauchen von beispielsweise Fußgängern im innerstädtischen Bereich aufgrund von Zebrastreifen, Gefahrenstellenhinweisen, Schulen oder Ampeln mit Fußgängerübergang etc. nahe liegend ist und daher derartige Umfeldbedingungen, ob sie nun von der Umfelderkennung oder von einer Navigationseinrichtung erkannt werden, in die Prognose des sich bewegenden Objekts einfließen.

Ein erfindungsgemäßes Fahrerassistenzsystem mit einer teilautomatischen Fahrfunktion zur Längs- und Querführung des Kraftfahrzeugs zur Durchführung des im Vorangegangenen beschriebenen Verfahrens zum Fahren eines Kraftfahrzeuges mit einer teilautomatischen Fahrfunktion, weist auf:
- eine auf einer Umfeldsensorik basierenden Umfelderkennung zur Erkennung des Umfelds des Kraftfahrzeugs und zur Bestimmung der Verkehrsteilnehmer im Umfeld des Kraftfahrzeugs und ihrer Bewegungstrajektorien,
- eine Prognoseeinrichtung zum Aufstellen einer Prognose aus den Daten der Umfeldsensorik, ob sich bewegende Objekte im Umfeld des Kraftfahrzeugs befinden oder befinden werden, und
- eine Entscheidungseinrichtung zur Beendigung einer aktiven teilautomatischen Fahrfunktion, wenn die Prognoseeinrichtung ein neues sich bewegendes Objekt prognostiziert, dessen Verhalten nicht mit dem üblicher Verkehrsteilnehmer übereinstimmt und welches nicht den von der Umfelderkennung bestimmten Verkehrsteilnehmern zugeordnet werden kann.

Vorzugsweise weist die Umfeldsensorik zur Erfassung des Umfeldes des Kraftfahrzeugs Kamera-, PMD-, Laser-, Radar- und/oder Ultraschallsensoren auf.

Weiter bevorzugt weist das Fahrerassistenzsystem eine Einrichtung zum Empfang funkbasierter Dienste sowie zur Auswertung der über die funkbasierten Dienste empfangenen Informationen auf, wobei bei aktiver teilautomatischer Fahrfunktion eine Übernahmeaufforderung zur Beendigung der teilautomatischen Fahrfunktion an den Fahrer ergeht, wenn die Auswertung ergibt, dass sich Fußgänger auf dem voraus liegenden Streckenabschnitt aufhalten.

Zusammengefasst wird eine automatische Fahrfunktion, hier als teilautomatische Fahrfunktion bezeichnet, betrachtet, welche bei niedrigen Geschwindigkeiten, wie sie beispielsweise im Stau, bei zähfließendem Verkehr oder im innerstädtischen Verkehr auftreten, die Längs- und Querführung des Fahrzeugs übernimmt. Eine bevorzugte Ausführungsform der Erfindung betrifft folgende Funktionalität: Erkennt das System im Automatischen Fahrmodus das Vorhandensein von Personen auf der Fahrbahn oder deutet es sich an, dass Personen auf die Fahrbahn treten könnten, dann erfolgt bei fahrendem Fahrzeug eine Übernahmeaufforderung an den Fahrzeugführer mit dem Ziel, die Automatische Fahrfunktion zu beenden. Auch bei stehendem Fahrzeug erfolgt eine Übernahmeaufforderung. Zusätzlich unterbleibt das automatische Wiederanfahren im Stopp & Go Betrieb.

Diese Erweiterung der teilautomatischen Fahrfunktion liegt im Wesentlichen darin begründet, dass eine Fahrsituation mit Personen auf der Fahrbahn mit einem erhöhten Unfallrisiko behaftet ist. Nun ist eine zuverlässige Fußgängerkennung, welche sowohl die Existenz als auch die Signifikanz, also die Prognose, ob aufgrund der Bewegungstrajektorie der Person ein Unfall droht, von Fußgängern zuverlässig beurteilt, technisch sehr anspruchsvoll. Daher ist in dieser Situation eine Übergabe der Längs- und Querführung von der automatischen Fahrfunktion an den Fahrer sinnvoll.

Nun können Personen auf der Fahrbahn im innerstädtischen Verkehr jederzeit auftauchen. Wie Unfallstatistiken zeigen, ist aber auch auf Autobahnen und Schnellstraßen mit Personen auf der Fahrbahn zu rechnen. Beispiele hierfür sind Fahrer und Passagiere, welche ihr stehendes Fahrzeug entweder im Stau oder bei einer Fahrzeugpanne verlassen, Baustellenpersonal oder Fußgänger, welche fahrlässig eine Autobahn überqueren.

Die Existenz von Fußgängern kann daher entweder durch Umfeldsensoren im eigenen Fahrzeug erfasst werden und/oder durch Warnmeldungen eines zentralen Dienstes an das Fahrzeug erfolgen. Das plötzliche Auftauchen eines Fußgängers auf der Fahrbahn kann auch daraus gefolgert werden, dass sich die Fahrzeugtür eines stehenden Fahrzeugs in unmittelbarer Nähe des eigenen Fahrzeugs öffnet. Im innerstädtischen Bereich kann aufgrund von Zebrastreifen, Gefahrenstellenhinweisen, wie beispielsweise Gefahrenzeichen 133 "Fußgänger", Gefahrenzeichen 134 "Fußgängerüberweg", Gefahrenzeichen 136 "Kinder"" Schulen und Kindergärten in Straßennähe, Ampeln mit Fußgängerübergang oder dem Fahren in verkehrsberuhigten Zonen oder Wohngebieten auf ein erhöhtes Risiko von Fußgängerunfällen gefolgert werden, was in die Prognose einfließen kann, um eine Übernahmeaufforderung an den Fahrer zu generieren.

Eine bevorzugte Ausführungsform der Erfindung wird nachfolgende anhand der Zeichnungen erläutert. Dabei zeigt
Fig. 1 eine Sensorkonfiguration zur Fußgängerkennung mit Kameras,
Fig. 2 eine Sensorkonfiguration zur Fußgängerkennung mit Ultraschallsensoren, und
Fig. 3 das Fahrerassistenzsystem in schematischer Darstellung.

Personen im Fahrzeugumfeld können prinzipiell durch Umfeldsensoren wie Kamera-, PMD-(Photonic Mixer Devices), Laser-, Radar- oder Ultraschallsensoren erfasst werden. Überwacht werden muss neben dem Frontbereich auch der Seitenbereich des eigenen Fahrzeugs um beim Wiederanfahren keine Fußgänger zu gefährden.

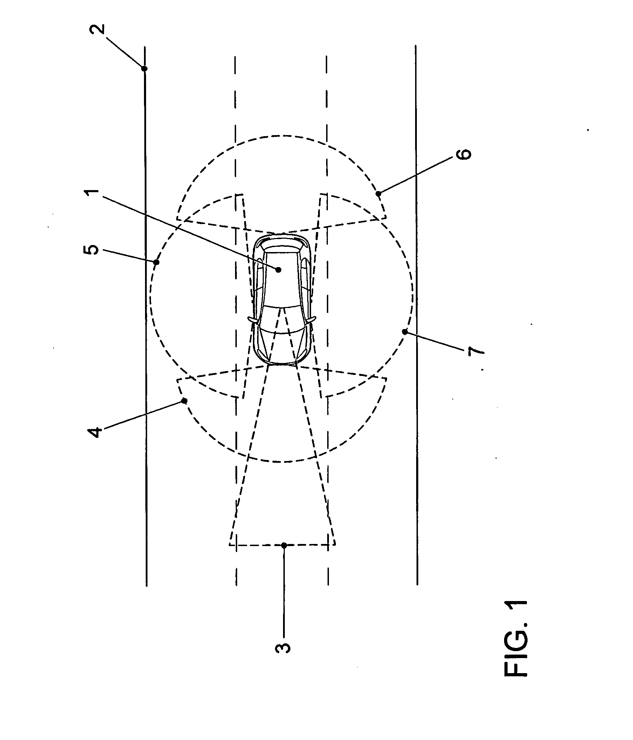

Fig. 1 zeigt eine mögliche Sensorkonfiguration eines Fahrzeugs 1 auf einer dreispurigen Fahrbahn 2. Der Frontbereich vor dem Fahrzeug 1 wird bis mittlere Entfernungen, d.h. ca. 20 bis 50 m, durch eine Sensorplattform 3 bestehend aus einer Mono- oder Stereo-Kamera oder einen PMD-Sensor abgedeckt.

Das unmittelbare Fahrzeugumfeld wird in Fig. 1 durch die vier Kameras, nämlich einer vorderen Kamera 4, einer rechts seitlich angeordneten Kamera 5, einer hinteren Kamera 6, und einer seitlich links angeordneten Kamera 7 eines sogenannten Area-View-Systems überwacht. Dabei bedeutet Area-View, dass das Bild der vier Weitwinkel-Kameras 4, 5, 6, 7 entzerrt und zu einem Bild zusammengeführt wird, welches das Fahrzeug aus einer Vogelperspektive zeigt. Dieses Bild wird dem Fahrer beispielsweise im Bildschirm des Navigationssystems angezeigt, um ihn beim Parken, Rangieren oder Wiederanfahren zu unterstützen.

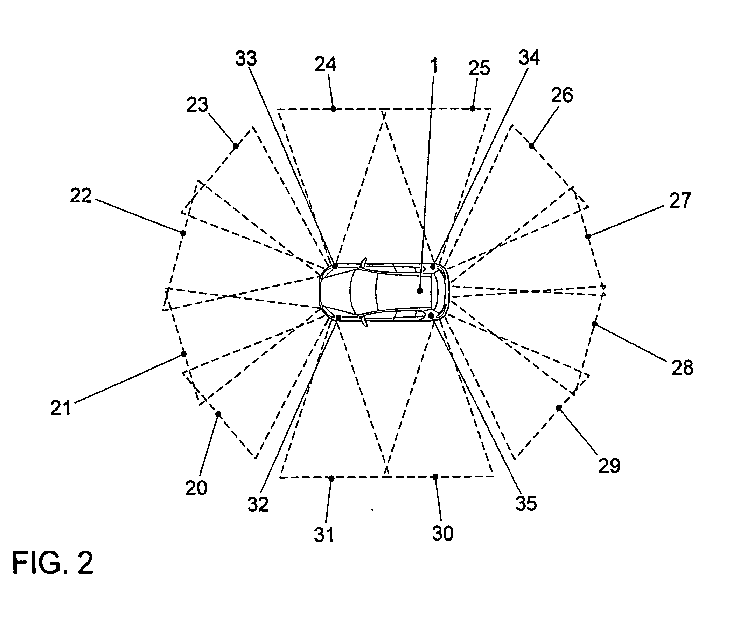

Fig. 2 zeigt eine weitere Möglichkeit einer Sensorkonfiguration mit einer 12-Kanal Ultraschallsensoranlage. Dargestellt ist das Fahrzeug 1 auf einer dreispurigen Fahrbahn 2, wobei auch in dieser Sensorkonfiguration der Frontbereich vor dem Fahrzeug 1 bis mittlere Entfernungen, d.h. ca. 20 bis 50 m, durch eine Sensorplattform 3 bestehend aus einer Mono- oder Stereo-Kamera oder einen PMD-Sensor abgedeckt wird.

Die 12-Kanal-Sensoranlage umfasst zur Umfelddetektion nach vorne einen vorderen linken Ultraschallsensor 10, einen vorderen links mittig angeordneten Ultraschallsensor 11, einen vorderen rechts mittig angeordneten Ultraschallsensor 12 und einen vorderen rechten Ultraschallsensor 13. Rechts seitlich sind ein vorderer Ultraschallsensor 14 und ein hinterer Ultraschallsensor 15 angeordnet. Zur Beobachtung des hinteren Umfeldes des Fahrzeugs 1 sind ein hinterer rechter Ultraschallsensor 16, ein hinterer rechts mittig angeordneten Ultraschallsensor 17, ein hinterer links mittig angeordneten Ultraschallsensor 18 und ein hinterer linker Ultraschallsensor 19 am Fahrzeug 1 angeordnet. Schließlich sind seitlich links am Fahrzeug 1 ein hinterer Ultraschallsensor 20 und ein vorderer Ultraschallsensor 21 angeordnet.

Die Ultraschallsensoren 10 bis 21 werden so betrieben, dass ihre Reichweite ca. 5m beträgt. Hierdurch können sich annähernde Fußgänger frühzeitig erkannt werden. Zudem ist eine exakte Abstandsmessung wie sie bei Einparkvorgängen erforderlich ist, bei welchen die Ultraschallsensoren üblicherweise mit einer Reichweite von maximal 3m betrieben werden, nicht notwendig.

Im unmittelbaren Seitenbereich des Fahrzeugs existiert links und rechts jeweils eine Detektionslücke 22 und 23. Betrachtet man die Ultraschallsensoren 14 und 15 bzw. 20 und 21 wie eine Lichtschranke, so kann aber auch hier eine Annäherung von Personen rechtzeitig erkannt werden: Durchschreitet eine Person die "Lichtschranke" und betritt dann die Detektionslücke 22, 23, so erfolgt wiederum eine Übernahmeaufforderung bzw. bei stehendem Fahrzeug unterbleibt das automatische Wiederanfahren.

Wenn beispielsweise in einem Stau zwischen benachbarten Fahrzeugen, also beispielsweise dem Vordermann oder Fahrzeugen auf den benachbarten Fahrstreifen, und dem eigenen Fahrzeug plötzlich ein anderes, bewegtes Objekt detektiert wird, so kann davon ausgegangen werden, dass dieses Objekt mit hoher Wahrscheinlichkeit ein Fußgänger oder ein "sich durchschlängelnder" Kraftradfahrer ist. In beiden Fällen liegt aber keine "monotone" Fahrsituation mehr vor, so dass eine Übernahmeaufforderung erforderlich ist.

Ergänzend kann vor Fußgängern auf der Fahrbahn auch über funkbasierte Dienste gewarnt werden, beispielsweise TMC, TMC pro, HD Traffic von TomTom, Audi Connect, BMW Connected Drive etc.. Führt man diese Information dem automatischen Fahrsystem zu, so kann wiederum eine Fahrerübernahme erfolgen bzw. das automatische Wiederanfahren unterbunden werden, wenn die Meldung des Dienstes relevant ist, sich also der gemeldete Fußgänger auf dem voraus liegenden Streckenabschnitt aufhält.

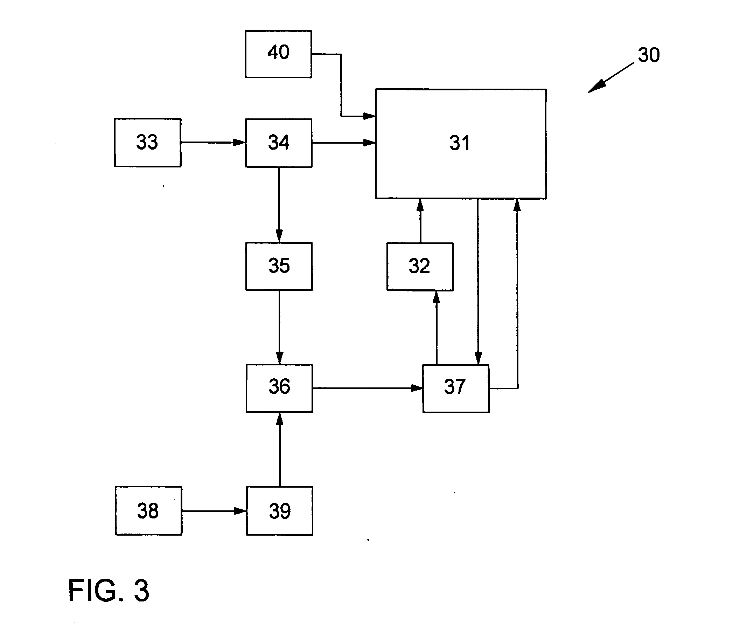

Fig. 3 zeigt das erfindungsgemäße Fahrerassistenzsystem in schematischer Darstellung. Dabei weist das Fahrerassistenzsystem 30 eine im Vorangegangenen beschriebene Fahrfunktionseinrichtung 31 zur Ausführung einer teilautomatische Fahrfunktion auf, die von dem Fahrer 32 des Fahrzeugs fortlaufend überwacht wird. Ferner ist eine Umfeldsensorik 33 vorhanden, die in den Figuren 1 und 2 näher beschrieben ist. Aus den Signalen der Umfeldsensorik 33 wird eine Umfelderkennung 34 durchgeführt, deren Ergebnisse der teilautomatischen Fahrfunktion 31 zum Ausführen der Fahrfunktion zugeführt werden. Weiterhin werden in einer Prognoseeinrichtung 35 das von der Umfelderkennung 34 ermittelte Umfeld des Fahrzeugs nach sich bewegenden Objekten durchsucht. Lassen sich die im Umfeld des Fahrzeugs ermittelten, sich bewegenden Objekte nicht mit von der Umfelderkennung 34 bestimmten Verkehrsteilnehmern in Übereinstimmung bringen, so wird eine Prognose erstellt, inwieweit das sich bewegende Objekt, beispielsweise ein Fußgänger, eine Gefährdung darstellt. Mit anderen Worten, es wird eine Prognose erstellt, ob der Fahrer 31 aktiv werden müsste, da ein "nicht identifiziertes" Objekt sich im Umfeld des Fahrzeugs bewegt. Als Funktion der Wertigkeit der Prognose entscheidet eine Entscheidungseinrichtung 36, ob eine Aufforderungseinrichtung 37 eine Übernahmeaufforderung an den Fahrer 32 abgibt. Mit der Aufforderung zur Übernahme der Fahrverantwortung an den Fahrer 32 wird innerhalb der Aufforderungseinrichtung ein Zeitfenster geöffnet. Erfolgt von der Fahrfunktionseinrichtung 31 keine Rückmeldung innerhalb des Zeitfensters, dass der Fahrer 32 die Fahrfunktion übernommen hat, so wird die Fahrfunktionseinrichtung 31 von der Aufforderungseinrichtung 37 zur kontrollierten Beendigung der automatischen Fahrfunktion aufgefordert. Optional weist das Fahrerassistenzsystem 30 ferner eine Empfangseinrichtung 38 zum Empfang von funkbasierten Diensten, beispielsweise Verkehrsinformationen, auf. Diese von der Empfangseinrichtung 38 empfangenen Informationen der funkbasierten Dienste werden in einer Auswerteeinrichtung 39 daraufhin untersucht, ob beispielsweise Fußgängerwarnungen für den voraus liegenden Streckenabschnitt ergangen sind. Ist dies der Fall, so wird die Entscheidungseinrichtung 36 entsprechend informiert. Ferner ist eine Einrichtung 40 zur Ermittlung der Fahrzeuggeschwindigkeit vorhanden, so dass die Fahrfunktionseinrichtung 31 die automatische Fahrfunktion nur dann ausführen kann, wenn die Fahrzeuggeschwindigkeit unterhalb einer vorgegebenen Grenze liegt.

## Patentansprüche

1. Verfahren zum Fahren eines Kraftfahrzeuges (1) mit einer teilautomatischen Fahrfunktion zur Längs- und Querführung des Kraftfahrzeugs (1), wobei bei aktiver teilautomatischer Fahrfunktion eine Umfelderkennung des Kraftfahrzeugs (1) durchgeführt wird, aus den Umfelddaten der Umfelderkennung fortlaufend Verkehrsteilnehmer im Umfeld einschließlich ihrer Bewegungstrajektorien bestimmt werden, und der Fahrer (32) des Kraftfahrzeugs (1) die teilautomatische Fahrfunktion dauerhaft überwacht,
**dadurch gekennzeichnet, dass**
bei aktiver teilautomatischer Fahrfunktion eine Übernahmeaufforderung mit dem Ziel der Beendigung der teilautomatischen Fahrfunktion an den Fahrer (32) ergeht, wenn ein neues sich bewegendes Objekt im Umfeld des Kraftfahrzeugs ermittelt wird, dessen Verhalten nicht mit dem üblicher Verkehrsteilnehmer übereinstimmt und welches nicht den von der Umfelderkennung bestimmten Verkehrsteilnehmern zugeordnet werden kann.

2. Verfahren nach Anspruch 1, **dadurch gekennzeichnet, dass** die teilautomatische Fahrfunktion in einem niedrigen Geschwindigkeitsbereich, insbesondere in einem Bereich kleiner 60 km/h, des Kraftfahrzeugs aktiv ist.

3. Verfahren nach Anspruch 1, **dadurch gekennzeichnet, dass** das sich bewegende Objekt ein Fußgänger, Radfahrer oder ein sich regelwidrig verhaltendes Zweiradfahrzeug ist.

4. Verfahren nach einem der vorangegangenen Ansprüche, **dadurch gekennzeichnet, dass** eine Analyse des sich bewegenden Objekts durchgeführt wird, wobei die Aufforderung zur Übernahme der Fahrfunktion an den Fahrer (32) erfolgt, wenn die Analyse einen Fußgänger im Umfeld des Kraftfahrzeugs prognostiziert.

5. Verfahren nach einem der vorangegangenen Ansprüche, **dadurch gekennzeichnet, dass** bei einer Nichtbeachtung der Übernahmeaufforderung seitens des Fahrers nach einem vorgegebenen Zeitintervall das Fahrzeug situationsabhängig zum Stillstand gebracht wird.

6. Verfahren nach einem der Ansprüche 4 oder 5, **dadurch gekennzeichnet, dass** die Analyse des sich bewegenden Objekts innerhalb der Umfelderkennung des Kraftfahrzeugs (1) durchgeführt wird und/oder aus Warnmeldungen eines zentralen Dienstes, insbesondere funkbasierten Verkehrsinformationsdiensten, abgeleitet wird.

7. Verfahren nach Anspruch 5, **dadurch gekennzeichnet, dass** aus von der Umfelderkennung erkannten Umfeldbedingungen und/oder durch von einer Navigationseinrichtung bestimmten Umfeldbedingungen auf eine erhöhte Auftretungsgefahr von sich bewegenden Objekten, insbesondere Fußgänger, geschlossen wird.

8. Fahrerassistenzsystem mit einer teilautomatische Fahrfunktion (31) zur Längs- und Querführung des Kraftfahrzeugs zur Durchführung des Verfahren zum Fahren eines Kraftfahrzeuges mit einer teilautomatischen Fahrfunktion nach einem der vorangegangenen Ansprüche, mit einer auf einer Umfeldsensorik (33) basierenden Umfelderkennung (34) zur Erkennung des Umfelds des Kraftfahrzeugs und zur Bestimmung der Verkehrsteilnehmer im Umfeld des Kraftfahrzeugs und ihrer Bewegungstrajektorien,
**dadurch gekennzeichnet, dass**
das Fahrerassistenzsystem weiter aufweist:
eine Prognoseeinrichtung (35) zum Aufstellen einer Prognose aus den Daten der Umfeldsensorik (33, 34), welche erkennt, ob sich bewegende Objekte im Umfeld des Kraftfahrzeugs befinden oder befinden werden, und
eine Entscheidungseinrichtung (36, 37)) zur Beendigung einer aktiven teilautomatischen Fahrfunktion, wenn die Prognoseeinrichtung (35) ein neues sich bewegendes Objekt prognostiziert, dessen Verhalten nicht mit dem üblicher Verkehrsteilnehmer übereinstimmt und welches nicht den von der Umfelderkennung (34) bestimmten Verkehrsteilnehmern zugeordnet werden kann.

9. Fahrerassistenzsystem nach Anspruch 8, **dadurch gekennzeichnet, dass** die Umfeldsensorik (33) Kamera-, PMD-, Laser-, Radar- und/oder Ultraschallsensoren aufweist.

10. Fahrerassistenzsystem nach Anspruch 8 oder 9, **dadurch gekennzeichnet, dass** das Fahrerassistenzsystem eine Einrichtung zum Empfang funkbasierter Dienste sowie zur Auswertung (38, 39) der über die funkbasierten Dienste empfangenen Informationen aufweist, wobei bei aktiver teilautomatischer Fahrfunktion eine Übernahmeaufforderung zur Beendigung der teilautomatischen Fahrfunktion an den Fahrer ergeht, wenn die Auswertung ergibt, dass sich Fußgänger auf dem voraus liegenden Streckenabschnitt aufhalten.

## Claims

1. Method for driving a motor vehicle (1) with a partially automatic driving function for performing longitudinal and lateral guidance of the motor vehicle (1), wherein when the partially automatic driving function is active the surroundings of the motor vehicle (1) are detected, road users in the surroundings, including their movement trajectories, are determined continuously on the basis of the surroundings data from the detection of the surroundings, and the driver (32) of the motor vehicle (1) constantly monitors the partially automatic driving function,
**characterized in that**
when the partially automatic driving function is active a request to assume control is issued to the driver (32) with the target for the ending of the partially automatic driving function if a new moving object is detected in the surroundings of the motor vehicle, the behaviour of which object does not correspond to that of customary road users and which cannot be assigned to the road users determined by the detection of the surroundings.

2. Method according to Claim 1, **characterized in that** the partially automatic driving function is active in a low speed range, in particular in a range of less than 60 km/h, of the motor vehicle.

3. Method according to Claim 1, **characterized in that** the moving object is a pedestrian, cyclist or a two-wheeled vehicle which is behaving contrary to regulations.

4. Method according to one of the preceding claims, **characterized in that** an analysis of the moving object is carried out, wherein the request to assume control of the driving function is issued to the driver (32) if the analysis predicts a pedestrian in the surroundings of the motor vehicle.

5. Method according to one of the preceding claims, **characterized in that** when the request to assume control is not observed by the driver the vehicle is brought to a standstill as a function of the situation after a predefined time interval.

6. Method according to one of Claims 4 or 5, **characterized in that** the analysis of the moving object is carried out within the detection of the surroundings of the motor vehicle (1) and/or is derived from warning messages of a central service, in particular radio-based traffic information services.

7. Method according to Claim 5, **characterized in that** an increased risk of moving objects, in particular pedestrians, appearing is inferred from surrounding conditions detected by the detection of the surroundings and/or by surrounding conditions determined by a navigation device.

8. Driver assistance system with a partially automatic driving function (31) for performing longitudinal and lateral guidance of the motor vehicle in order to carry out the method for driving a motor vehicle with a partially automatic driving function according to one of the preceding claims, with a detection (34) of the surroundings on the basis of a surrounding sensor system (33) in order to detect the surroundings of the motor vehicle and to determine the road users in the surroundings of the motor vehicle and their movement trajectories,
**characterized in that**
the driver system also has:
a prediction device (35) for producing a prediction on the basis of the data of the surroundings sensor system (33, 34) which detects whether moving objects are or will be located in the surroundings of the motor vehicle, and
a decision device (36, 37) for ending an active automatic or partially automatic driving function if the prediction device (35) predicts a new moving object whose behaviour does not correspond to that of customary road users and which cannot be assigned to the road users determined by the detection (34) of the surroundings.

9. Driver assistance system according to Claim 8.
**characterized in that** the surroundings sensor system (33) has camera sensors, PMD sensors, laser sensors, radar sensors and/or ultrasonic sensors.

10. Driver assistance system according to Claim 8 or 9, **characterized in that** the driver assistance system has a device for receiving radio-based services and for evaluating (38, 39) the information received via the radio-based services, wherein when the partially automatic driving function is active a request to assume control is issued to the driver in order to end the partially automatic driving function if the evaluation reveals that there are pedestrians located on the section of route lying ahead.

## Revendications

1. Procédé de conduite d'un véhicule automobile (1) équipé d'une fonction de conduite semi-automatique permettant le guidage longitudinal et transversal du véhicule automobile (1), une reconnaissance d'environnement du véhicule automobile (1) étant réalisée lorsque la fonction de conduite semi-automatique est active, les usagers de la route dans l'environnement, y compris leurs trajectoires mobiles, étant définis en continu à partir des données d'environnement de la reconnaissance d'environnement et le conducteur (32) du véhicule automobile (1) surveillant de façon durable la fonction de conduite semi-automatique, **caractérisé en ce que** lorsque la fonction de conduite semi-automatique est active, une demande de reprise visant à mettre un terme à la fonction de conduite semi-automatique est communiquée au conducteur (32) lorsqu'un nouvel objet se déplaçant dans l'environnement du véhicule automobile est déterminé dont le comportement ne coïncide pas avec celui d'usagers de la route habituels et ne pouvant pas être associé aux usagers de la route définis par la reconnaissance d'environnement.

2. Procédé selon la revendication 1, **caractérisé en ce que** la fonction de conduite semi-automatique est active dans une plage de vitesse basse du véhicule automobile, notamment dans une plage inférieure à 60 km/h.

3. Procédé selon la revendication 1, **caractérisé en ce que** l'objet se déplaçant est un piéton, un cycliste ou un véhicule à deux roues circulant de façon anarchique.

4. Procédé selon l'une quelconque des revendications précédentes, **caractérisé en ce qu'**une analyse de l'objet se déplaçant est réalisée, la demande de reprise de la fonction de conduite communiquée au conducteur (32) se produisant lorsque l'analyse pronostique la présence d'un piéton dans l'environnement du véhicule automobile.

5. Procédé selon l'une quelconque des revendications précédentes, **caractérisé en ce qu'**en cas de non-respect de la demande de reprise du côté du conducteur après un intervalle de temps prédéfini, le véhicule est amené à l'arrêt en fonction de la situation observée.

6. Procédé selon l'une quelconque des revendications 4 ou 5, **caractérisé en ce que** l'analyse de l'objet se déplaçant est réalisée à l'intérieur de la reconnaissance d'environnement du véhicule automobile (1) et/ou coordonné avec les messages d'avertissement d'un service central, notamment de services d'info-trafic basé sur radio.

7. Procédé selon la revendication 5, **caractérisé en ce qu'**on déduit, à partir des conditions environnementales détectées par la reconnaissance d'environnement et/ou grâce aux conditions environnementales définies par un dispositif de navigation, un risque accru de présence d'objets se déplaçant, notamment de piétons.

8. Système d'aide à la conduite équipé d'une fonction de conduite semi-automatique (31) permettant le guidage longitudinal et transversal du véhicule automobile, pour la mise en oeuvre du procédé de conduite d'un véhicule automobile équipé d'une fonction de conduite semi-automatique selon l'une quelconque des revendications précédentes, avec une reconnaissance d'environnement (34) se basant sur un système d'analyse sensorielle de l'environnement (33) servant à identifier l'environnement du véhicule automobile et à déterminer la présence d'usagers de la route dans l'environnement du véhicule automobile et leurs trajectoires mobiles ;
**caractérisé en ce que** :
le système d'aide à la conduite comporte en outre :
un dispositif de pronostic (35) permettant d'établir un pronostic à partir des données du système d'analyse sensorielle de l'environnement (33, 34) et détectant si les objets se déplaçant se trouvent ou vont se trouver dans l'environnement du véhicule automobile ; et
un dispositif de prise de décision (36, 37) permettant de mettre un terme à une fonction de conduite semi-automatique active lorsque le dispositif de pronostic (35) pronostique un nouvel objet se déplaçant dont le comportement ne correspond pas à celui d'usagers de la route habituels et ne pouvant pas être associé aux usagers de la route définis par la reconnaissance d'environnement (34).

9. Système d'aide à la conduite selon la revendication 8, **caractérisé en ce que** le système d'analyse sensorielle de l'environnement (33) comporte des capteurs à caméra, PMD, laser, radar et/ou ultrasons.

10. Système d'aide à la conduite selon la revendication 8 ou 9, **caractérisé en ce que** le système d'aide à la conduite comporte un dispositif de réception de services basés sur radio ainsi que d'analyse (38, 39) des informations reçues provenant des services basés sur radio, une demande de reprise visant à mettre un terme à la fonction de conduite semi-automatique étant communiquée au conducteur, lorsque la fonction de conduite semi-automatique est active, lorsque l'analyse indique la présence de piétons se tenant sur la section de tronçon située devant le véhicule.
